# EUROPÄISCHE PATENTSCHRIFT

(11) **EP 3 231 498 B1**
(45) Veröffentlichungstag und Bekanntmachung des Hinweises auf die Patenterteilung: **08.04.2020**
(21) Anmeldenummer: 17166153.1
(22) Anmeldetag: 12.04.2017
(51) Int. Cl.: B01D 46/00, B01D 46/24

(54) **FILTERANORDNUNG**
FILTER ASSEMBLY
SYSTÈME DE FILTRE

(30) Priorität: 12.04.2016 DE 102016004315
(43) Veröffentlichungstag der Anmeldung: 18.10.2017
(73) Patentinhaber: Mann+Hummel GmbH, 71636 Ludwigsburg (DE)
(72) Erfinder: Sorger, Nadine, 70736 Fellbach (DE)
(74) Vertreter: Seyboth, Matthias

(56) Entgegenhaltungen:
- WO-A1-2009/106590
- WO-A1-2009/106593
- WO-A2-2014/197698
- DE-A1- 2 819 198

## Beschreibung

### Technisches Gebiet

Die vorliegende Erfindung betrifft eine Filteranordnung.

### Stand der Technik

Eine Filteranordnung, beispielsweise zum Filtern von Luft oder von flüssigen Betriebsmitteln eines Fahrzeugs, kann ein Hauptfilterelement und ein in dem Hauptfilterelement aufgenommenes Sekundärfilterelement aufweisen. Das Sekundärfilterelement dient im Wesentlichen dazu, bei einem Austausch des Hauptfilterelements eine Verunreinigung einer Reinseite der Filteranordnung mit zu filterndem Rohfluid zu verhindern.

Die DE 10 2013 002 057 B4 beschreibt eine Filtereinrichtung mit einem äußeren Filterelement und einem inneren Filterelement, wobei das äußere und das innere Filterelement separat ausgebildet und ineinander montiert sind und das innere Filterelement über seine Länge eine veränderliche Querschnittsform aufweist, wobei das äußere Filterelement ein Stützgerüst aufweist, das Träger eines Filtermediums des Filterelements ist, wobei eine Stirnseite des inneren Filterelements am Stützgerüst des äußeren Filterelements abgestützt ist und wobei das innere Filterelement eine linienförmige Stirnseite aufweist.

Die EP 2 862 614 A1 beschreibt ein Filtersystem mit einem Filtergehäuse, einem Hauptfilterelement und einem Sekundärfilterelement, wobei das Hauptfilterelement und das Sekundärfilterelement in dem Filtergehäuse aufgenommen sind. Das Hauptfilterelement und das Sekundärfilterelement weisen jeweils ein Dichtelement zum Abdichten derselben gegenüber dem Filtergehäuse auf. Das Dichtelement des Sekundärfilterelements ist innerhalb des Dichtelements des Hauptfilterelements angeordnet, wobei beide Dichtelemente in dem Filtergehäuse abgestützt sind.

Ferner ist aus der DE 28 19 198 A1 ein zweistufiger Luftfilter bekannt, der in einem gemeinsamen Gehäuse ein kegelstumpfförmiges Hauptfilterelement und in dessen Innenraum ein mit der Form des Hauptfilterelements korrespondierendes Sekundärfilterelement aufweist. Das Hauptfilterelement dichtet gegenüber einer Gehäusestirnwand axial ab, wobei es durch eine Spanneinrichtung verpresst wird. Die zur Erzeugung der Dichtkraft eingeleitete Spannkraft wird von einem radial einragenden Abschnitt der Dichtung des Hauptfilterelements auf einen radial ausragenden Abschnitt der Dichtung des Sekundärfilterelements übertragen, sodass das Sekundärfilterelement mittelbar durch das Hauptfilterelement zur Abdichtung auf die Gehäusestirnwand pressbar ist.

Eine ähnliche Filteranordnung ist auch aus der WO 2014/197698 A2 bekannt, mit der Besonderheit, dass die axiale Länge des Sekundärfilterelements größer ist als die axiale Länge des Hauptfilterelements.

### Offenbarung der Erfindung

Es ist daher Aufgabe der vorliegenden Erfindung, eine verbesserte Filteranordnung zur Verfügung zu stellen.

Demgemäß wird eine Filteranordnung, insbesondere eine Luftfilteranordnung, mit einem Filtergehäuse, einem Hauptfilterelement, das eine Endscheibe mit einem ersten Dichtelement zum Abdichten des Hauptfilterelements gegenüber dem Filtergehäuse aufweist, und einem Sekundärfilterelement, das eine Endscheibe mit einem zweiten Dichtelement zum Abdichten des Sekundärfilterelements gegenüber dem Filtergehäuse aufweist, vorgeschlagen. Das Hauptfilterelement und das Sekundärfilterelement sind in dem Filtergehäuse aufgenommen, wobei die Endscheibe des Sekundärfilterelements bezüglich einer Längsrichtung der Filteranordnung zwischen der Endscheibe des Hauptfilterelements und dem Filtergehäuse, insbesondere einer entsprechenden Abstützkontur des Filtergehäuses, angeordnet ist und wobei die Endscheibe des Sekundärfilterelements innerhalb eines Strömungsquerschnitts eines Fluidauslasses des Filtergehäuses angeordnet ist.

Die Filteranordnung ist insbesondere dazu eingerichtet, Fluide, wie beispielsweise Luft oder andere Gase, Flüssigkeiten, insbesondere flüssige Betriebsmittel eines Fahrzeugs, insbesondere eines Kraftfahrzeugs, wie Öl, Wasser, Benzin, Diesel, Kerosin oder Harnstofflösung zu filtern. Insbesondere ist das Hauptfilterelement ein Luftfilterelement. Auch das Sekundärfilterelement kann ein Luftfilterelement sein. Die Filteranordnung ist insbesondere dazu geeignet, Verbrennungsluft einer Brennkraftmaschine, insbesondere für eine landwirtschaftliche Maschine, einen Lastkraftwagen oder eine Baumaschine, zu filtern. Insofern kann die Filteranordnung eine Luftfilteranordnung für Verbrennungsluft einer Brennkraftmaschine in einem Kraftfahrzeug sein. Die Filteranordnung kann Anwendung in Kraftfahrzeugen, Wasserfahrzeugen, Schienenfahrzeugen, landwirtschaftlichen Fahrzeugen, Baumaschinen, Luftfahrzeugen oder dergleichen finden. Ferner kann die Filteranordnung auch bei immobilen Anwendungen, wie beispielsweise in der Gebäudetechnik, eingesetzt werden.

Das Hauptfilterelement kann auch als erstes Filterelement, Primärfilterelement, Primärelement oder Hauptelement bezeichnet werden. Das Sekundärfilterelement kann auch als zweites Filterelement, Sicherheitsfilterelement, Sicherheitselement, Sekundärelement, Nebenfilterelement oder Nebenelement bezeichnet werden. Das Sekundärfilterelement ist optional. Das heißt, die Filteranordnung ist auch ohne das Sekundärfilterelement funktionsfähig. Das Sekundärfilterelement ist insbesondere dazu geeignet, bei einem Austausch des Hauptfilterelements zu verhindern, dass zu filterndes Fluid von einer Rohseite auf eine Reinseite der Filteranordnung gelangt.

Das Hauptfilterelement weist vorzugsweise einen ovalen Querschnitt auf. Das Sekundärfilterelement kann ebenfalls einen ovalen Querschnitt aufweisen. Als ovaler Querschnitt - insbesondere quer zu der Längsrichtung des Filterelements - wird ein Querschnitt verstanden, der eine von einem Kreis abweichende Umfangslinie hat und insbesondere rundlich konvex ist. Die Umfangslinie hat dabei vorzugsweise eine Krümmung ohne Vorzeichenwechsel. Denkbar ist zum Beispiel eine Ellipse oder Stadionform. Unter "oval" kann vorliegend auch ein rechteckiger Querschnitt mit verrundeten Ecken, ein elliptischer Querschnitt oder ein aus mehreren Kreisbögen gebildeter Querschnitt verstanden werden. Der Querschnitt ist vorzugsweise geschlossen und umfasst eine Hauptsymmetrieachse und eine senkrecht zu der Hauptsymmetrieachse positionierte Nebensymmetrieachse. Der Querschnitt ist symmetrisch aufgebaut. Das heißt, der Querschnitt ist sowohl zu der Hauptsymmetrieachse als auch zu der Nebensymmetrieachse symmetrisch. Eine Längenausdehnung des Querschnitts in Richtung der Hauptsymmetrieachse ist vorzugsweise größer als eine Längenausdehnung des Querschnitts in Richtung der Nebensymmetrieachse. Alternativ können das Hauptfilterelement und/oder das Sekundärfilterelement auch jeweils einen kreisrunden Querschnitt aufweisen.

Vorzugsweise weisen auch das erste Dichtelement und das zweite Dichtelement eine ovale Geometrie oder Kontur auf. Das Hauptfilterelement weist vorzugsweise eine erste Endscheibe, an der das erste Dichtelement vorgesehen ist, und eine zweite Endscheibe auf. Zwischen den beiden Endscheiben kann ein gefaltetes Filtermedium angeordnet sein. Das Sekundärfilterelement weist vorzugsweise nur eine einzige Endscheibe auf, an der das zweite Dichtelement vorgesehen ist. Alternativ kann auch das Sekundärfilterelement eine erste und eine zweite Endscheibe aufweisen. Das Sekundärfilterelement kann ein gefaltetes oder ein glattes Filtermedium aufweisen. Das Sekundärfilterelement kann plattenförmig oder tütenförmig sein. Ein tütenförmiges Filterelement ist beispielsweise in der zuvor schon erwähnten DE 10 2013 002 057 B4 beschrieben. Das Hauptfilterelement und/oder das Sekundärfilterelement können auch eine variable Faltenhöhe aufweisen. Derartige Filterelemente mit variablen Faltenhöhen sind beispielsweise in der DE 10 2012 000 470 A1 beschrieben.

Dadurch, dass die Endscheibe des Sekundärfilterelements zwischen der Endscheibe des Hauptfilterelements und dem Filtergehäuse angeordnet ist, ist das Sekundärfilterelement vibrationssicher fixiert. Insbesondere ist das Sekundärfilterelement dadurch axial fixiert. Durch die axiale Fixierung wird die Dichtheitsfunktion der Dichtelemente verbessert. Dadurch, dass die Endscheibe des Sekundärfilterelements innerhalb des Strömungsquerschnitts des Fluidauslasses angeordnet ist, wird bei einem Verzicht auf das Sekundärfilterelement eine Einengung des Strömungsquerschnitts des Fluidauslasses verhindert. Hierdurch kann die Filterleistung erhöht werden. Dadurch, dass sich die Endscheibe des Sekundärfilterelements direkt auf der Endscheibe des Hauptfilterelements abstützt, kann das Sekundärfilterelement kostengünstiger produziert werden, da keine Metall- oder Kunststoffschiene zum Abstützen desselben auf dem Hauptfilterelement benötigt wird. Ferner kann auch ein Kopierschutz erreicht werden, da das Sekundärfilterelement so gestaltet sein muss, dass es nur zwischen der Endscheibe des Hauptfilterelements und dem Gehäuse aufnehmbar ist. Toleranzen in der Herstellung des Hauptfilterelements und des Sekundärfilterelements können mit Hilfe der Dichteinrichtungen einfach ausgeglichen werden. Eine Beschädigung des Sekundärfilterelements oder eine Geräuschentwicklung beim Abziehen des Hauptfilterelements werden dadurch verhindert, dass das Sekundärfilterelement innerhalb des Strömungsquerschnitts angeordnet ist.

In Ausführungsformen dichtet das erste Dichtelement das Hauptfilterelement radial gegenüber dem Filtergehäuse ab und das zweite Dichtelement dichtet das Sekundärfilterelement radial gegenüber dem Filtergehäuse ab. Unter "radial" ist eine senkrecht zu der Längsrichtung der Filteranordnung orientierte Richtung zu verstehen. Vorzugsweise weist das Filtergehäuse einen rohrförmigen Dichtabschnitt auf, an dem sowohl das erste Dichtelement als auch das zweite Dichtelement dichtend anliegen. Das erste Dichtelement ist insbesondere materialeinstückig mit der Endscheibe des Hauptfilterelements und das zweite Dichtelement ist materialeinstückig mit der Endscheibe des Sekundärfilterelements ausgebildet. Die Endscheiben sind vorzugsweise aus einem Kunststoffmaterial gefertigt. Insbesondere können die Endscheiben aus einem Polyurethanwerkstoff (PUR) gefertigt sein, der an das jeweilige Filtermedium des Hauptfilterelements beziehungsweise des Sekundärfilterelements angegossen ist. Die Endscheiben sind somit elastisch verformbar und/oder komprimierbar. Dadurch, dass die Dichtelemente nur radial und nicht axial abdichten, kann die axiale Fixierung des Sekundärfilterelements ausschließlich durch die Endscheibe des Hauptfilterelements und das Filtergehäuse erfolgen.

In Ausführungsformen ist eine erste Dichtrichtung des ersten Dichtelements entgegengesetzt einer zweiten Dichtrichtung des zweiten Dichtelements orientiert. Die Dichtrichtungen sind vorzugsweise senkrecht zu der Längsrichtung der Filteranordnung orientiert. Die erste Dichtrichtung ist von dem Hauptfilterelement in Richtung des Sekundärfilterelements orientiert. Die zweite Dichtrichtung ist von dem Sekundärfilterelement in Richtung des Hauptfilterelements orientiert. Insbesondere ist der Dichtabschnitt des Filtergehäuses zwischen dem ersten Dichtelement und dem zweiten Dichtelement angeordnet, so dass sich die Dichtelemente vorzugsweise nicht direkt berühren.

In Ausführungsformen ist die Endscheibe des Sekundärfilterelements elastisch verformbar und zwischen der Endscheibe des Hauptfilterelements und dem Filtergehäuse in der Längsrichtung komprimiert. Hierdurch wird die Endscheibe des Sekundärfilterelements zwischen der Endscheibe des Hauptfilterelements und dem Filtergehäuse verspannt. Dadurch ist ein fester und dauerhafter Sitz des Sekundärfilterelements auch bei starken Vibrationen gewährleistet.

Das Filtergehäuse weist eine Vielzahl an Stützrippen auf, wobei die Endscheibe des Sekundärfilterelements zwischen der Endscheibe des Hauptfilterelements und den Stützrippen angeordnet ist. Durch die Verwendung von Stützrippen anstatt eines umlaufenden Absatzes, auf dem sich die Endscheibe des Sekundärfilterelements abstützt, kann eine Einengung des Strömungsquerschnitts des Fluidauslasses durch den zuvor erwähnten Absatz vermieden werden.

Die Stützrippen ragen radial in den Strömungsquerschnitt des Fluidauslasses hinein. Die Anzahl der Stützrippen ist beliebig. Beispielsweise sind vier bis zehn Stützrippen vorgesehen. Die Stützrippen sind insbesondere materialeinstückig mit dem Dichtabschnitt des Filtergehäuses ausgebildet. Die Stützrippen können eine zahn- oder dreieckförmige Geometrie aufweisen. Das Filtergehäuse und die Stützrippen sind vorzugsweise aus einem Kunststoffmaterial gefertigt.

Erfindungsgemäß stützt sich die Endscheibe des Sekundärfilterelements zumindest abschnittsweise in axialer Richtung an der Endscheibe des Hauptfilterelements ab.

In Ausführungsformen weist die Endscheibe des Hauptfilterelements eine erste umlaufende Rippe auf und/oder die Endscheibe des Sekundärfilterelements weist eine zweite umlaufende Rippe auf, wobei sich die erste umlaufende Rippe auf der Endscheibe des Sekundärfilterelements abstützt oder wobei sich die zweite umlaufende Rippe auf der Endscheibe des Hauptfilterelements abstützt oder wobei sich die erste umlaufende Rippe direkt auf der zweiten umlaufenden Rippe abstützt. Die umlaufenden Rippen sind jeweils materialeinstückig mit den ihnen zugeordneten Endscheiben ausgebildet. Das heißt, die umlaufenden Rippen können federelastisch verformbar sein. Mit Hilfe der umlaufenden Rippen kann aufgrund einer Verkleinerung der Fläche, an der sich die Endscheiben aufeinander abstützen, die Flächenpressung zwischen der Endscheibe des Sekundärfilterelements und der Endscheibe des Hauptfilterelements erhöht werden. Hierdurch wird eine zuverlässigere Fixierung des Sekundärfilterelements erreicht.

In Ausführungsformen weisen die erste umlaufende Rippe und/oder die zweite umlaufende Rippe Unterbrechungen auf. Die Unterbrechungen können auch als Ausnehmungen, Durchbrüche oder Nuten bezeichnet werden. Insbesondere weisen die erste umlaufende Rippe und/oder die zweite umlaufende Rippe aufgrund der Unterbrechungen keine Fluiddichtheit auf. Das heißt, die umlaufenden Rippen erfüllen vorzugsweise keine Dichtfunktion sondern nur eine Stützfunktion.

In Ausführungsformen ist das Sekundärfilterelement außerhalb eines Innenraums des Hauptfilterelements angeordnet. Vorzugsweise ist das Sekundärfilterelement vollständig außerhalb des Innenraums angeordnet. Der Innenraum des Hauptfilterelements ist von einem Stützrohr desselben umgeben. Auf das Stützrohr kann das Filtermedium aufgewickelt sein. Das Sekundärfilterelement kann auch zumindest teilweise innerhalb des Innenraums angeordnet sein. Vorzugsweise ist das Sekundärfilterelement jedoch plattenförmig und außerhalb des Innenraums angeordnet. Das Sekundärfilterelement kann einen Stützrahmen aufweisen, an dem die Endscheibe befestigt ist.

In Ausführungsformen ist das zweite Dichtelement innerhalb des ersten Dichtelements angeordnet. Insbesondere ist das zweite Dichtelement in radialer Richtung innerhalb des ersten Dichtelements angeordnet. Das zweite Dichtelement und das erste Dichtelement weisen vorzugsweise eine ovale Kontur oder Geometrie auf, wobei das zweite Dichtelement umlaufend einen konstanten Abstand von dem ersten Dichtelement aufweist.

Weitere mögliche Implementierungen der Filteranordnung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zur jeweiligen Grundform der Filteranordnung hinzufügen.

Weitere Ausgestaltungen der Filteranordnung sind Gegenstand der Unteransprüche sowie der im Folgenden beschriebenen Ausführungsbeispiele der Filteranordnung. Im Weiteren wird die Filteranordnung anhand von Ausführungsbeispielen unter Bezugnahme auf die beigelegten Figuren näher erläutert.

### Kurze Beschreibung der Zeichnungen

Es zeigt dabei:
- Fig. 1:: eine schematische perspektivische Explosionsansicht einer Ausführungsform einer Filteranordnung;
- Fig. 2:: eine schematische Schnittansicht der Filteranordnung gemäß Fig. 1;
- Fig. 3:: eine weitere schematische Schnittansicht der Filteranordnung gemäß Fig. 1;
- Fig. 4:: eine schematische perspektivische Teilschnittansicht der Filteranordnung gemäß Fig. 1;
- Fig. 5:: eine schematische Schnittansicht einer weiteren Ausführungsform einer Filteranordnung;
- Fig. 6:: eine weitere schematische Schnittansicht der Filteranordnung gemäß Fig. 5; und
- Fig. 7:: eine schematische Schnittansicht einer weiteren Ausführungsform einer Filteranordnung.

In den Figuren sind gleiche oder funktionsgleiche Elemente, sofern nichts anderes angegeben ist, mit denselben Bezugszeichen versehen worden.

### Ausführungsform(en) der Erfindung

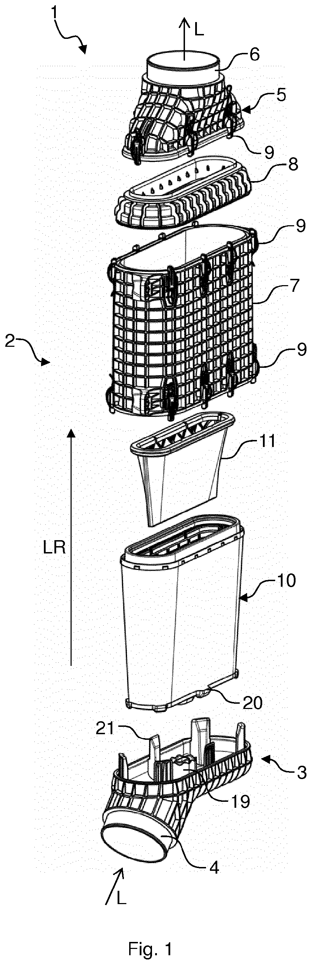

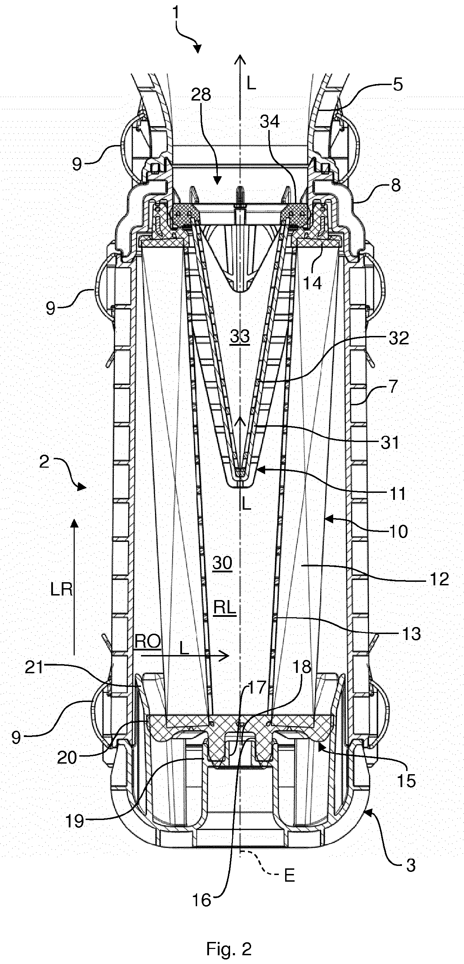

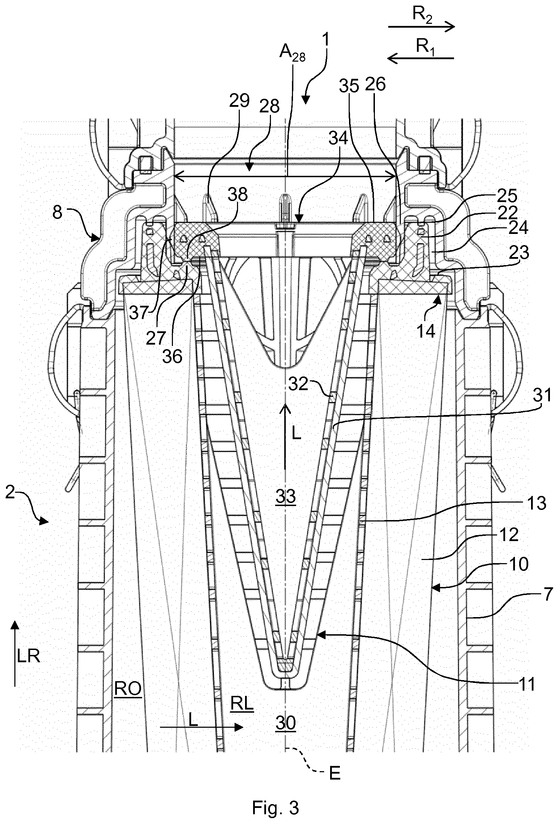

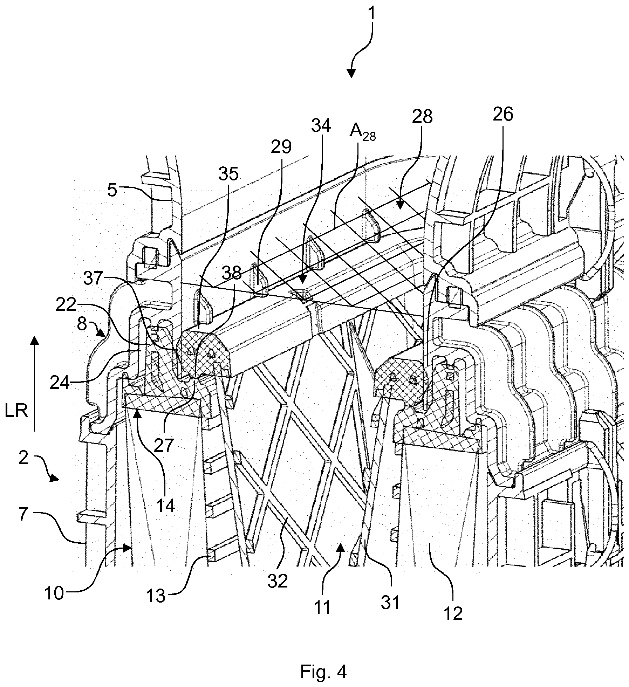

Die Fig. 1 zeigt eine schematische perspektivische Explosionsansicht einer Ausführungsform einer Filteranordnung 1. Die Fig. 2 zeigt eine schematische Schnittansicht der Filteranordnung 1. Die Fig. 3 zeigt eine weitere schematische Schnittansicht der Filteranordnung 1 und die Fig. 4 zeigt eine schematische perspektivische Teilschnittansicht der Filteranordnung 1. Im Folgenden wird auf die Fig. 1 bis 4 gleichzeitig Bezug genommen.

Die Filteranordnung 1 umfasst ein Filtergehäuse 2. Das Filtergehäuse 2 umfasst einen ersten Deckel 3 mit einem Einströmstutzen 4, einen zweiten Deckel 5 mit einem Ausströmstutzen 6, eine Filteraufnahme 7, die zwischen dem ersten Deckel 3 und dem zweiten Deckel 5 angeordnet ist, und ein Zwischenelement 8, das zwischen der Filteraufnahme 7 und dem zweiten Deckel 5 angeordnet ist. Die Filteraufnahme 7 weist im Querschnitt eine ovale Geometrie auf. Der erste Deckel 3, die Filteraufnahme 7, das Zwischenelement 8 und der zweite Deckel 5 sind mit Hilfe von Schnellverschlüssen 9, von denen eine Vielzahl vorgesehen ist, lösbar miteinander verbunden. Insbesondere sind an dem ersten Deckel 4 sowie an der Filteraufnahme 7 jeweils mehrere Schnellverschlüsse 9 vorgesehen. Filteraufnahme 7 und Zwischenelement 8 können auch einstückig ausgeführt sein. Weiterhin kann der zweite Deckel 5 einstückig mit Filteraufnahme 7 und/oder Zwischenelement 8 ausgebildet sein.

Die Filteranordnung 1 umfasst weiterhin ein Hauptfilterelement oder erstes Filterelement 10 und ein Sekundärfilterelement oder zweites Filterelement 11, die beide zusammen in dem Filtergehäuse 2 aufgenommen sind. Das erste Filterelement 10 kann auch als Primärfilterelement, Primärelement oder Hauptelement bezeichnet werden. Das zweite Filterelement 11 kann auch als Sicherheitsfilterelement, Sicherheitselement, Sekundärelement, Nebenelement oder Nebenfilterelement bezeichnet werden.

Die Filteranordnung 1 findet vorzugsweise in Kraftfahrzeugen, Lastkraftwagen, Baufahrzeugen, Wasserfahrzeugen, Schienenfahrzeugen, landwirtschaftlichen Maschinen beziehungsweise Fahrzeugen oder Luftfahrzeugen Anwendung. Der zweite Deckel 5 ist dann mit einer Fluidleitung verbunden. Die Filteranordnung 1 beziehungsweise das erste Filterelement 10 ist insbesondere dazu geeignet, Verbrennungsluft einer Brennkraftmaschine zu filtern. Vorzugsweise ist das erste Filterelement 10 ein Luftfilter. Das zweite Filterelement 11 kann ebenso dazu geeignet sein, Verbrennungsluft einer Brennkraftmaschine zu filtern. Vorzugsweise ist auch das zweite Filterelement 11 ein Luftfilter. Das zweite Filterelement 11 ist optional. Das heißt, die Filteranordnung 1 ist auch ohne das zweite Filterelement 11 funktionsfähig. Der zweite Deckel 5 ist vorzugsweise mit einer Zufuhrleitung für gereinigte Verbrennungsluft der Brennkraftmaschine verbunden bzw. bildet diese mit aus.

Das erste Filterelement 10 umfasst ein Filtermedium 12, das ein Stützrohr oder Mittelrohr 13 umgibt. Beispielsweise kann das Filtermedium 12 auf das Mittelrohr 13 aufgewickelt sein. Das Mittelrohr 13 ist vorzugsweise gitterförmig und damit fluiddurchlässig. Insbesondere kann das Mittelrohr 13 aus einem Kunststoffmaterial gefertigt sein. Das Filtermedium 12 ist vorzugsweise gefaltet. Das Filtermedium 12 ist beispielsweise ein Filtergewebe, ein Filtergelege oder ein Filtervlies. Insbesondere kann das Filtermedium 12 in einem Spinnvlies- oder Meltblown-Verfahren hergestellt sein. Weiter kann das Filtermedium 12 verfilzt oder vernadelt sein. Das Filtermedium 12 kann Naturfasern, wie Cellulose oder Baumwolle, oder Kunstfasern, beispielsweise aus Polyester, Polyvinylsulfit oder Polytetrafluorethylen, aufweisen. Die Fasern können bei der Verarbeitung in, schräg und/oder quer zur Maschinenrichtung orientiert sein.

Das erste Filterelement 10 weist eine erste Endscheibe 14 und eine zweite Endscheibe 15 auf, zwischen denen das Filtermedium 12 angeordnet ist. Die Endscheiben 14, 15 sind vorzugsweise aus einem Kunststoffmaterial gefertigt. Die Endscheiben 14, 15 können beispielsweise aus PUR, insbesondere aus einem aufgeschäumten PUR, gefertigt sein. Die Endscheiben 14, 15 können an das Filtermedium 12 und an das Mittelrohr 13 angegossen sein, so dass sich das Filtermedium 12 und das Mittelrohr 13 zumindest teilweise in die Endscheiben 14, 15 hineinerstrecken. Die Endscheiben 14, 15 sind zumindest abschnittsweise federelastisch verformbar und/oder kompressibel. Die Endscheiben 14, 15 und auch die gesamten Filterelemente 10, 11 sind spiegelsymmetrisch zu einer Symmetrieebene E ausgebildet.

Die zweite Endscheibe 15 umfasst in dieser Ausführungsform einen mittig angeordneten Aufnahmeabschnitt 16, in den ein Eingriffsabschnitt 17 des ersten Deckels 3 formschlüssig eingreift. Der Eingriffsabschnitt 17 kann ein rohrförmiger Dorn mit einem mittigen Durchbruch 18 sein. Der Aufnahmeabschnitt 16 der zweiten Endscheibe 15 dichtet gegenüber dem Eingriffsabschnitt 17 sowohl axial, das heißt, in einer Längsrichtung LR der Filteranordnung 1, als auch radial, das heißt, senkrecht zu der Längsrichtung LR ab, so dass durch den mittigen Durchbruch 18 kein Fluid aus dem Filtergehäuse 2 austreten kann. Der Eingriffsabschnitt 17 ist Teil einer Aufnahmekrone 19 des ersten Deckels 3.

Die zweite Endscheibe 15 umfasst weiterhin eine Vielzahl regelmäßig voneinander beabstandet angeordneter Abstandshalter 20, die dazu eingerichtet sind, sich auf korrespondierenden Stützabschnitten 21 des ersten Deckels 3 abzustützen. Mit Hilfe der Aufnahmekrone 19, der Abstandshalter 20 und der Stützabschnitte 21 ist das erste Filterelement 10 so in dem Filtergehäuse 2 positioniert, dass es sich auch bei starken Vibrationen nicht relativ zu dem Filtergehäuse 2 bewegen kann.

Es versteht sich von selbst, dass die axiale Abstützung des ersten Filterelements 10 im Gehäuse 2 auch auf andere als die dargestellte Art und Weise möglich ist.

Das erste Filterelement 10 umfasst ein elastisch verformbares erstes Dichtelement 22, das an einer dem Filtermedium 12 abgewandten Vorderseite 23 der ersten Endscheibe 14 vorgesehen ist. Das erste Dichtelement 22 ist insbesondere materialeinstückig mit der ersten Endscheibe 14 ausgebildet und läuft ringförmig um die erste Endscheibe 14 um. Das erste Dichtelement 22 weist eine ovale Geometrie oder Kontur auf. Das erste Dichtelement 22 ist dazu eingerichtet, das erste Filterelement 10 radial gegenüber dem Filtergehäuse 2 abzudichten. Hierzu weist das Filtergehäuse 2 im Bereich des Zwischenelements 8 einen umlaufenden Aufnahmeabschnitt 24 auf, in dem das erste Dichtelement 22 aufgenommen ist. In Axialrichtung beziehungsweise in Längsrichtung LR ragt in den Aufnahmeabschnitt 24 ein Anschlag 25 hinein, mit dessen Hilfe das erste Filterelement 10 axial in dem Filtergehäuse 2 positionierbar ist.

Das Filtergehäuse 2 bzw. das Zwischenelement 8 weist weiterhin einen rohrförmigen und im Querschnitt ovalen Dichtabschnitt 26 auf, gegen den das erste Dichtelement 22 in einer ersten Dichtrichtung R₁ radial abdichtet. Die erste Dichtrichtung R₁ ist senkrecht zu der Längsrichtung LR und von dem ersten Dichtelement 22 weg in Richtung des zweiten Filterelementes 11 orientiert. Das erste Dichtelement 22 wird beim Abdichten gegenüber dem Dichtabschnitt 26 federelastisch verformt beziehungsweise komprimiert. Diese Verformung des ersten Dichtelements 22 ist in den Fig. 2 bis 4 durch eine Überlappung des ersten Dichtelements 22 und des Dichtabschnitts 26 angedeutet.

An der Vorderseite 23 der ersten Endscheibe 14 ist weiterhin eine erste umlaufende Rippe 27 vorgesehen. Die erste umlaufende Rippe 27 verläuft innerhalb des ersten Dichtelements 22 und ist umlaufend konstant von dem ersten Dichtelement 22 beabstandet. Die erste umlaufende Rippe 27 weist keine Dichtwirkung auf und kann mit Durchbrüchen, Unterbrechungen und Ausnehmungen versehen sein, so dass die erste umlaufende Rippe 27 nicht fluiddicht ist.

Das Filtergehäuse 2 bzw. das Zwischenelement 8 umfasst weiterhin einen Fluidauslass 28 mit einem Strömungsquerschnitt A₂₈. Der Strömungsquerschnitt A₂₈ kann eine ovale Geometrie aufweisen. Der Strömungsquerschnitt A₂₈ ist in der Fig. 4 teilweise perspektivisch sichtbar und zur Verdeutlichung mit einer Kreuzschraffur versehen. In den Strömungsquerschnitt A₂₈ radial hinein ragt eine Vielzahl an Stützrippen 29. Die Stützrippen 29 erstrecken sich radial ausgehend von dem Dichtabschnitt 26 in den Strömungsquerschnitt A₂₈ hinein. Die Anzahl der Stützrippen 29 ist beliebig. Vorzugsweise sind die Stützrippen 29 gleichmäßig voneinander beabstandet angeordnet.

Das erste Filterelement 10 weist in der Längsrichtung LR einen ovalen oder elliptischen Querschnitt auf. Der Querschnitt kann sich ausgehend von der ersten Endscheibe 14 in Richtung der zweiten Endscheibe 15 verringern, so dass das erste Filterelement 10 konisch zuläuft. Alternativ kann das erste Filterelement 10 zylinderförmig sein und eine ovale oder elliptische Basisfläche aufweisen. Unter "oval" kann vorliegend ein rechteckiger Querschnitt mit verrundeten Ecken, ein elliptischer Querschnitt oder ein aus mehreren Kreisbögen gebildeter Querschnitt verstanden werden. Der Querschnitt ist symmetrisch aufgebaut.

Das zweite Filterelement 11 ist zumindest teilweise in einem Innenraum 30 des ersten Filterelements 10 aufgenommen. Der Innenraum 30 ist dabei durch das Mittelrohr 13 begrenzt. Das zweite Filterelement 11 umfasst ein Filtermedium 31, das vorzugsweise nicht gefaltet und somit glatt ist. Das Filtermedium 31 ist beispielsweise ein Filtergewebe, ein Filtergelege oder ein Filtervlies. Insbesondere kann das Filtermedium 31 in einem Spinnvlies- oder Meltblown-Verfahren hergestellt sein. Weiter kann das Filtermedium 31 verfilzt oder vernadelt sein. Das Filtermedium 31 kann Naturfasern, wie Cellulose oder Baumwolle, oder Kunstfasern, beispielsweise aus Polyester, Polyvinylsulfit oder Polytetrafluorethylen, aufweisen. Die Fasern können bei der Verarbeitung in, schräg und/oder quer zur Maschinenrichtung orientiert sein.

Das zweite Filterelement 11 ist, wie in der Fig. 1 deutlich zu erkennen ist, tütenförmig ausgebildet. Das Filtermedium 31 ist an einem Stützrohr oder Mittelrohr 32 angebracht. Das Mittelrohr 32 umgrenzt einen Innenraum 33 des zweiten Filterelements 11. Das Mittelrohr 32 ist gitterförmig und fluiddurchlässig. Beispielsweise ist das Mittelrohr 32 ein Kunststoffspritzgussbauteil. Das zweite Filterelement 11 umfasst nur eine Endscheibe 34, die vorzugsweise aus einem Kunststoffmaterial gefertigt ist. Die Endscheibe 34 kann aus PUR, insbesondere aus aufgeschäumten PUR, gefertigt sein. Die Endscheibe 34 ist federelastisch verformbar und komprimierbar.

Die Endscheibe 34 kann an das Mittelrohr 32 und an das Filtermedium 31 angegossen sein, so dass diese fest mit der Endscheibe 34 verbunden sind. Die Endscheibe 34 umfasst eine den Stützrippen 29 zugewandte Vorderseite 35 und eine den Stützrippen 29 abgewandte Rückseite 36. Die Stützrippen 29 liegen an der Vorderseite 35 an. Die Endscheibe 34 ist somit zwischen den Stützrippen 29 des Filtergehäuses 2, die eine Abstützkontur darstellen, und der ersten Endscheibe 14 des ersten Filterelements 10 angeordnet. Hierdurch kann eine Verspannung der Endscheibe 34 zwischen dem Filtergehäuse 2 und der ersten Endscheibe 14 des ersten Filterelements 10 erreicht werden.

Die Endscheibe 34 umfasst ein umlaufendes zweites Dichtelement 37 zum radialen Abdichten des zweiten Filterelements 11 gegenüber dem Filtergehäuse 2. Insbesondere ist das zweite Dichtelement 37 materialeinstückig mit der Endscheibe 34 ausgebildet. Das zweite Dichtelement 37 dichtet in einer zweiten Dichtrichtung R₂, die entgegengesetzt der ersten Dichtrichtung R₁ orientiert ist, gegenüber dem Dichtabschnitt 26 des Zwischenelements 8 bzw. des Filtergehäuses 2 ab. Hierbei wird das zweite Dichtelement 37 komprimiert. Diese elastische Verformung des zweiten Dichtelements 37 ist in den Fig. 2 bis 4 durch eine Überlappung des zweiten Dichtelements 37 und des Dichtabschnitts 26 gezeigt. Das zweite Dichtelement 37 weist mit Blickrichtung in der Längsrichtung LR, wie das erste Dichtelement 22, eine ovale Geometrie oder Kontur auf. Das zweite Dichtelement 37 ist innerhalb des ersten Dichtelements 22 angeordnet und vorzugsweise umlaufend konstant von diesem beabstandet.

An der Rückseite 36 der Endscheibe 34 ist eine zu der ersten umlaufenden Rippe 27 korrespondierende zweite umlaufende Rippe 38 vorgesehen. Wie in den Fig. 2 bis 4 gezeigt, können die umlaufenden Rippen 27, 38 aneinander anliegen, so dass sich die Endscheibe 34 des zweiten Filterelements 11 auf der ersten Endscheibe 14 des ersten Filterelements 10 abstützt. Die zweite umlaufende Rippe 38 kann ebenfalls unterbrochen sein. Das heißt, sie kann Durchbrüche, Unterbrechungen oder Ausnehmungen aufweisen. Insbesondere kann die zweite umlaufende Rippe 38 fluiddurchlässig sein. Erste umlaufende Rippe 27 und zweite umlaufende Rippe 38 sind jeweils optional; eine direkte Abstützung der Endscheiben 14, 34 ist ebenfalls möglich. Die Endscheibe 34 des zweiten Filterelements 11 ist anders als die erste Endscheibe 14 des ersten Filterelements 10 vollständig innerhalb des Strömungsquerschnitts A₂₈ angeordnet.

Im Betrieb der Filteranordnung 1 strömt zu reinigendes Fluid L, beispielsweise Luft, in den Einströmstutzen 4 des Filtergehäuses 2 ein, wird in dem Filtergehäuse 2 mit Hilfe der Filterelemente 10, 11 von Verschmutzungen befreit und strömt anschließend als gereinigtes Fluid L wieder aus dem Ausströmstutzen 6 des Filtergehäuses 2 aus. Insbesondere strömt das zu reinigende Fluid L von einer Rohseite RO des ersten Filterelements 10 durch das Filtermedium 12 hindurch als gefiltertes Fluid L in den von dem Mittelrohr 13 umgebenen Innenraum 30 auf eine Reinseite RL des ersten Filterelements 10. Das von dem ersten Filterelement 10 gereinigte Fluid L strömt nun aus dem Innenraum 30 des ersten Filterelements 10 durch das Filtermedium 31 des zweiten Filterelements 11 hindurch in den Innenraum 33 des zweiten Filterelements 11 und von dort durch den Fluidauslass 28 hin zu dem Ausströmstutzen 6.

Die Funktionalität der Filteranordnung 1 ist auch ohne das zweite Filterelement 11 gewährleistet. Das zweite Filterelement 11 verhindert jedoch bei einem Austausch des ersten Filterelements 10, dass zu filterndes Fluid L ungefiltert zu dem Fluidauslass 28 gelangt. Dadurch, dass die Endscheibe 34 des zweiten Filterelements 11 vollständig innerhalb des Strömungsquerschnitts A₂₈ des Fluidauslasses 28 angeordnet ist, wird bei einem Weglassen des zweiten Filterelements 11 verhindert, dass der Strömungsquerschnitt A₂₈ eingeengt wird. Hierdurch kann eine erhöhte Filterleistung erreicht werden. Um eine Einengung des Strömungsquerschnitts A₂₈ zu verhindern, ist die Endscheibe 34 des zweiten Filterelements 11 nicht zwischen einem den Strömungsquerschnitt A₂₈ verengenden umlaufenden Absatz des Filtergehäuses 2 und der ersten Endscheibe 14 des ersten Filterelements 10 angeordnet, sondern zwischen den in den Strömungsquerschnitt A₂₈ hineinragenden Stützrippen 29 und der ersten Endscheibe 14 des ersten Filterelements 10.

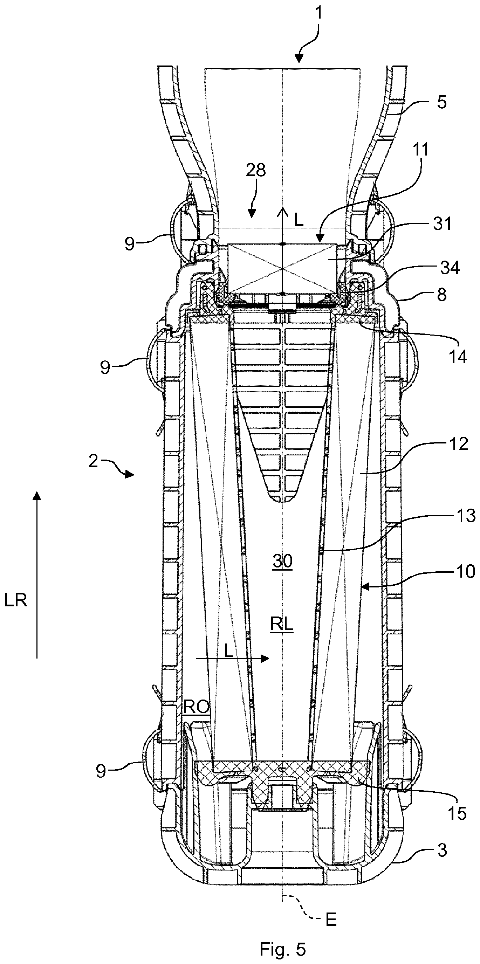

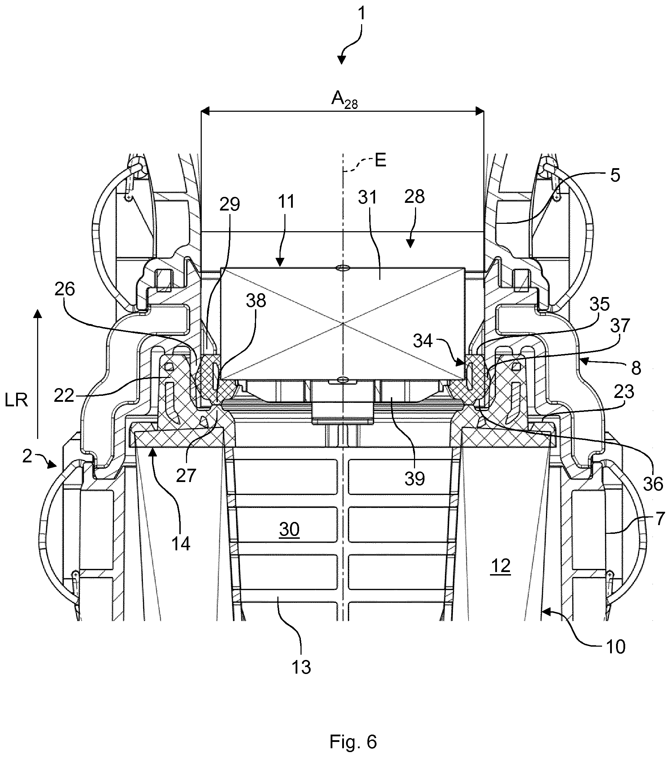

Die Fig. 5 und 6 zeigen in schematischen Schnittansichten eine weitere Ausführungsform einer Filteranordnung 1. Die Filteranordnung 1 gemäß der Fig. 5 und 6 unterscheidet sich von der Filteranordnung 1 gemäß der Fig. 1 bis 4 nur durch eine andere Ausgestaltung des zweiten Filterelements 11. Das zweite Filterelement 11 ist plattenförmig und weist ein gefaltetes Filtermedium 31 mit einer Endscheibe 34 auf. Das zweite Filterelement 11 ist vollständig außerhalb des Innenraums 30 des ersten Filterelements 10 und insbesondere in dem Strömungsquerschnitt A₂₈ des Fluidauslasses 28 angeordnet. Die Endscheibe 34 kann direkt an das Filtermedium 31 angegossen sein.

Das zweite Filterelement 11 kann einen Stützrahmen 39 aufweisen, der vorzugsweise aus einem Kunststoffmaterial gefertigt ist. Die Endscheibe 34 ist an den Stützrahmen 39 und an das Filtermedium 31 angegossen. Der Stützrahmen 39 kann auch mit dem Filtermedium 31 verklebt sein. Die Funktionalität der Filteranordnung 1 gemäß den Fig. 5 und 6 entspricht der Funktionalität der Filteranordnung 1 gemäß den Fig. 1 bis 4.

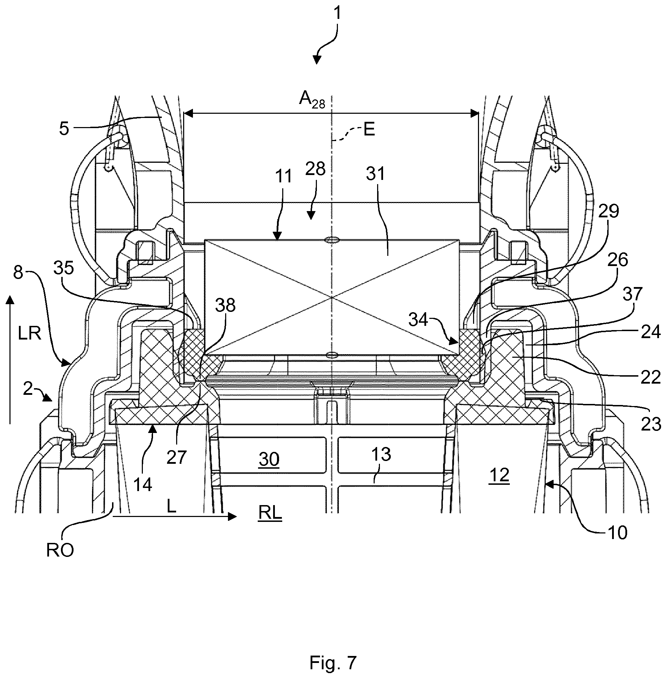

Die Fig. 7 zeigt eine schematische Schnittansicht einer weiteren Ausführungsform einer Filteranordnung 1. Die Filteranordnung 1 gemäß der Fig. 7 unterscheidet sich von der Filteranordnung 1 gemäß den Fig. 5 und 6 lediglich dadurch, dass das zweite Filterelement 11 keinen Stützrahmen 39 aufweist. Das heißt, die Endscheibe 34 ist direkt an das gefaltete Filtermedium 31 angegossen.

### Verwendete Bezugszeichen:

- 1: Filteranordnung
- 2: Filtergehäuse
- 3: Deckel
- 4: Einströmstutzen
- 5: Deckel
- 6: Ausströmstutzen
- 7: Filteraufnahme
- 8: Zwischenelement
- 9: Schnellverschluss
- 10: Filterelement
- 11: Filterelement
- 12: Filtermedium
- 13: Mittelrohr
- 14: Endscheibe
- 15: Endscheibe
- 16: Aufnahmeabschnitt
- 17: Eingriffsabschnitt
- 18: Durchbruch
- 19: Aufnahmekrone
- 20: Abstandshalter
- 21: Stützabschnitt
- 22: Dichtelement
- 23: Vorderseite
- 24: Aufnahmeabschnitt
- 25: Anschlag
- 26: Dichtabschnitt
- 27: Rippe
- 28: Fluidauslass
- 29: Stützrippe
- 30: Innenraum
- 31: Filtermedium
- 32: Mittelrohr
- 33: Innenraum
- 34: Endscheibe
- 35: Vorderseite
- 36: Rückseite
- 37: Dichtelement
- 38: Rippe
- 39: Stützrahmen

- A₂₈: Strömungsquerschnitt
- E: Symmetrieebene
- L: Fluid
- LR: Längsrichtung
- RL: Reinseite
- RO: Rohseite
- R₁: Dichtrichtung
- R₂: Dichtrichtung

## Patentansprüche

1. Filteranordnung (1), insbesondere Luftfilteranordnung, mit einem Filtergehäuse (2), einem Hauptfilterelement (10), das eine Endscheibe (14) mit einem ersten Dichtelement (22) zum Abdichten des Hauptfilterelements (10) gegenüber dem Filtergehäuse (2) aufweist, und einem Sekundärfilterelement (11), das eine Endscheibe (34) mit einem zweiten Dichtelement (37) zum Abdichten des Sekundärfilterelements (11) gegenüber dem Filtergehäuse (2) aufweist, wobei das Hauptfilterelement (10) und das Sekundärfilterelement (11) in dem Filtergehäuse (2) aufgenommen sind, wobei die Endscheibe (34) des Sekundärfilterelements (11) bezüglich einer Längsrichtung (LR) der Filteranordnung (1) zwischen der Endscheibe (14) des Hauptfilterelements (10) und dem Filtergehäuse (2) angeordnet ist, wobei die Endscheibe (34) des Sekundärfilterelements (11) innerhalb eines Strömungsquerschnitts (A₂₈) eines Fluidauslasses (28) des Filtergehäuses (2) angeordnet ist, wobei sich die Endscheibe (14) des Hauptfilterelements (10) und die Endscheibe (34) des Sekundärfilterelements (11) zumindest abschnittsweise in axialer Richtung aneinander abstützen, wobei das Filtergehäuse (2) eine Vielzahl an Stützrippen (29) aufweist, die radial in den Strömungsquerschnitt (A₂₈) des Fluidauslasses (28) hineinragen, und wobei die Endscheibe (34) des Sekundärfilterelements (11) zwischen der Endscheibe (14) des Hauptfilterelements (10) und den Stützrippen (29) angeordnet ist.

2. Filteranordnung nach Anspruch 1, wobei das erste Dichtelement (22) das Hauptfilterelement (10) radial gegenüber dem Filtergehäuse (2) abdichtet und wobei das zweite Dichtelement (37) das Sekundärfilterelement (11) radial gegenüber dem Filtergehäuse (2) abdichtet.

3. Filteranordnung nach Anspruch 2, wobei eine erste Dichtrichtung (R₁) des ersten Dichtelements (22) entgegengesetzt einer zweiten Dichtrichtung (R₂) des zweiten Dichtelements (37) orientiert ist.

4. Filteranordnung nach einem der Ansprüche 1 bis 3, wobei die Endscheibe (14) des Hauptfilterelements (10) eine erste umlaufende Rippe (27) aufweist und/oder wobei die Endscheibe (34) des Sekundärfilterelements (11) eine zweite umlaufende Rippe (38) aufweist und wobei sich die erste umlaufende Rippe (27) auf der Endscheibe (34) des Sekundärfilterelements (11) abstützt oder wobei sich die zweite umlaufende Rippe (38) auf der Endscheibe (14) des Hauptfilterelements (10) abstützt oder wobei sich die erste umlaufende Rippe (27) direkt auf der zweiten umlaufenden Rippe (38) abstützt.

5. Filteranordnung nach Anspruch 4, wobei die erste umlaufende Rippe (27) und/oder die zweite umlaufende Rippe (38) Unterbrechungen aufweisen.

6. Filteranordnung nach einem der Ansprüche 1 - 5, wobei das Sekundärfilterelement (11) außerhalb eines Innenraums (30) des Hauptfilterelements (10) angeordnet ist.

7. Filteranordnung nach einem der Ansprüche 1 - 6, wobei das zweite Dichtelement (37) innerhalb des ersten Dichtelements (22) angeordnet ist.

## Claims

1. Filter arrangement (1), in particular air filter arrangement, having a filter housing (2), a main filter element (10) which features an end disc (14) with a first sealing element (22) for sealing the main filter element (10) against the filter housing (2), and a secondary filter element (11) which features an end disc (34) with a second sealing element (37) for sealing the secondary filter element (11) against the filter housing (2), wherein the main filter element (10) and the secondary filter element (11) are accommodated in the filter housing (2), wherein the end disc (34) of the secondary filter element (11) is disposed between the end disc (14) of the main filter element (10) and the filter housing (2) with respect to a longitudinal direction (LR) of the filter arrangement (1), wherein the end disc (34) of the secondary filter element (11) is disposed inside a flow cross-section (A₂₈) of a fluid outlet (28) of the filter housing (2), wherein the end disc (14) of the main filter element (10) and the end disc (34) of the secondary filter element (11) support each other at least sectionwise in axial direction, wherein the filter housing (2) features a plurality of supporting ribs (29) which protrude radially into the flow cross-section (A₂₈) of the fluid outlet (28), and wherein the end disc (34) of the secondary filter element (11) is disposed between the end disc (14) of the main filter element (10) and the supporting ribs (29).

2. Filter arrangement according to claim 1, wherein the first sealing element (22) seals the main filter element (10) radially against the filter housing (2) and wherein the second sealing element (37) seals the secondary filter element (11) radially against filter housing (2).

3. Filter arrangement according to claim 2, wherein a first sealing direction (R₁) of the first sealing element (22) is oriented opposite to a second sealing direction (R₂) of the second sealing element (37).

4. Filter arrangement according to one of the claims 1 to 3, wherein the end disc (14) of the main filter element (10) features a first peripheral rib (27) and/or wherein the end disc (34) of the secondary filter element (11) features a second peripheral rib (38) and wherein the first peripheral rib (27) is supported by the end disc (34) of the secondary filter element (11) or wherein the second peripheral rib (38) is supported by the end disc (14) of the main filter element (10) or wherein the first peripheral rib (27) is directly supported by the second peripheral rib (38).

5. Filter arrangement according to claim 4, wherein the first peripheral rib (27) and/or the second peripheral rib (38) feature interruptions.

6. Filter arrangement according to one of the claims 1 to 5, wherein the secondary filter element (11) is disposed outside an interior space (30) of the main filter element (10).

7. Filter arrangement according to one of the claims 1 to 6, wherein the second sealing element (37) is arranged inside the first sealing element (22).

## Revendications

1. Agencement de filtre (1), en particulier agencement de filtre à air, avec un boîtier de filtre (2), un élément filtrant principal (10), qui présente un disque d'extrémité (14) avec un premier élément d'étanchéité (22) destiné à étancher l'élément filtrant principal (10) contre le boîtier de filtre (2), et un élément filtrant secondaire (11), qui présente un disque d'extrémité (34) avec un second élément d'étanchéité (37) destiné à étancher l'élément filtrant secondaire (11) contre le boîtier de filtre (2), dans lequel l'élément filtrant principal (10) et l'élément filtrant secondaire (11) sont logés dans le boîtier de filtre (2), dans lequel le disque d'extrémité (34) de l'élément filtrant secondaire (11) est disposé entre le disque d'extrémité (14) de l'élément filtrant principal (10) et le boîtier de filtre (2) par rapport à un sens longitudinal (LR) de l'agencement de filtre (1), dans lequel le disque d'extrémité (34) de l'élément filtrant secondaire (11) est disposé à l'intérieur d'une section transversale d'écoulement (A₂₈) d'une sortie de fluide (28) du boîtier de filtre (2), dans lequel le disque d'extrémité (14) de l'élément filtrant principal (10) et le disque d'extrémité (34) de l'élément filtrant secondaire (11) s'appuient l'un sur l'autre au moins par sections en sens axial, dans lequel le boîtier de filtre (2) présente une pluralité de nervures d'appui (29) pénétrant radialement dans la section transversale d'écoulement (A₂₈) de la sortie de fluide (28), et dans lequel le disque d'extrémité (34) de l'élément filtrant secondaire (11) est disposé entre le disque d'extrémité (14) de l'élément filtrant principal (10) et les nervures d'appui (29).

2. Agencement de filtre selon la revendication 1, dans lequel le premier élément d'étanchéité (22) assure l'étanchéité de l'élément filtrant principal (10) radialement contre le boîtier de filtre (2) et dans lequel le second élément d'étanchéité (37) assure l'étanchéité de l'élément filtrant secondaire (11) radialement contre le boîtier de filtre (2).

3. Agencement de filtre selon la revendication 2, dans lequel un premier sens d'étanchéité (R₁) du premier élément d'étanchéité (22) est orienté à l'opposé d'un second sens d'étanchéité (R₂) du second élément d'étanchéité (37).

4. Agencement de filtre selon l'une des revendications 1 à 3, dans lequel le disque d'extrémité (14) de l'élément filtrant principal (10) présente une première nervure périphérique (27) et/ou dans lequel le disque d'extrémité (34) de l'élément filtrant secondaire (11) présente une seconde nervure périphérique (38) et dans lequel la première nervure périphérique (27) s'appuie sur le disque d'extrémité (34) de l'élément filtrant secondaire (11) ou dans lequel la seconde nervure périphérique (38) s'appuie sur le disque d'extrémité (14) de l'élément filtrant principal (10) ou dans lequel la première nervure périphérique (27) s'appuie directement sur la seconde nervure périphérique (38).

5. Agencement de filtre selon la revendication 4, dans lequel la première nervure périphérique (27) et/ou la seconde nervure périphérique (38) présentent des interruptions.

6. Agencement de filtre selon l'une des revendications 1 à 5, dans lequel l'élément filtrant secondaire (11) est disposé à l'extérieur d'un espace intérieur (30) de l'élément filtrant principal (10).

7. Agencement de filtre selon l'une des revendications 1 à 6, dans lequel le second élément d'étanchéité (37) est disposé à l'intérieur du premier élément d'étanchéité (22).
